(19) **Europäisches Patentamt**
**European Patent Office**
**Office européen des brevets**

(11) **EP 2 630 615 B1**

(12) **FASCICULE DE BREVET EUROPEEN**

(45) Date de publication et mention
de la délivrance du brevet:
**29.11.2017 Bulletin 2017/48**

(21) Numéro de dépôt: **11785041.2**

(22) Date de dépôt: **19.10.2011**

(51) Int Cl.:
*G06K 7/10* (2006.01)          *G06K 7/00* (2006.01)
*G06K 7/08* (2006.01)          *H04M 1/00* (2006.01)
*G06F 1/16* (2006.01)          *H04B 5/00* (2006.01)

(86) Numéro de dépôt international:
**PCT/FR2011/000562**

(87) Numéro de publication internationale:
**WO 2012/052631 (26.04.2012 Gazette 2012/17)**

(54) **APPAREIL COMPORTANT DES MOYENS DE COMMUNICATION PAR COUPLAGE INDUCTIF**

VORRICHTUNG MIT INDUKTIV GEKOPPELTER KOMMUNIKATIONSVORRICHTUNG

APPARATUS COMPRISING INDUCTIVE-COUPLING COMMUNICATION MEANS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **19.10.2010 FR 1004096**

(43) Date de publication de la demande:
**28.08.2013 Bulletin 2013/35**

(60) Demande divisionnaire:
**17198242.4**

(73) Titulaire: **Inside Secure
13590 Meyreuil (FR)**

(72) Inventeurs:
• **CORDIER, Nicolas**
  **F-13080 Luynes (FR)**
• **PERNISEK, Florian**
  **F-13100 AIX EN PROVENCE (FR)**

(74) Mandataire: **Marchand, André et al
OMNIPAT
24 Place des Martyrs de la Résistance
13100 Aix-en-Provence (FR)**

(56) Documents cités:
**EP-A1- 1 445 730          GB-A- 2 358 991
US-A1- 2004 256 468          US-A1- 2010 093 412**

# Description

La présente invention concerne un appareil comprenant des moyens de communication par couplage inductif configurés pour communiquer en mode poste-à-poste avec un appareil identique, les moyens de communication comprenant un contrôleur de communication et une bobine d'antenne plane accordée sur une fréquence de travail, reliée au contrôleur par l'intermédiaire de deux points de connexion et comportant N spires agencées en série entre les deux points de connexion.

La présente invention concerne également un procédé pour limiter le désaccord en fréquence entre une première et une seconde bobine d'antenne planes identiques accordées sur une fréquence de travail, lorsque les bobines d'antenne sont agencées l'une en face de l'autre à une distance inférieure à 10 millimètres.

La présente invention concerne également un procédé pour établir une communication par couplage inductif entre deux appareils identiques comprenant chacun des moyens de communication par couplage inductif configurés pour communiquer en mode poste-à-poste.

La présente invention concerne de façon générale les techniques de communication par couplage inductif également appelées "NFC" (Near Field Communications) ou communication en champ proche.

Une communication par couplage inductif fait généralement intervenir un dispositif NFC dit passif et un dispositif NFC dit actif, tous deux équipés d'une bobine d'antenne accordée sur une fréquence de travail, par exemple 13,56 MHz. Le dispositif actif émet un champ magnétique oscillant à la fréquence de travail, et envoie des données au dispositif passif en modulant le champ magnétique. Le dispositif passif reçoit une tension induite par le champ magnétique, qu'il démodule pour en extraire les données qu'elle contient, et envoie des données au dispositif actif par modulation de charge.

Les appareils équipés de dispositifs NFC, notamment les téléphones mobiles NFC, présentent généralement trois modes de fonctionnement : un mode "lecteur", un mode "émulation de carte", et un mode de fonctionnement dit "peer-to-peer" ou "poste-à-poste". La présente invention concerne plus (particulièrement les communications en mode poste-à-poste entre deux appareils identiques.

Lors d'une communication en mode poste-à-poste, deux appareils sont agencés face à face, l'un étant en mode actif et émettant le champ magnétique, l'autre étant en mode passif et recevant le champ magnétique sous forme d'une tension induite dans sa bobine d'antenne.

La conception de la bobine d'antenne doit généralement tenir compte des normes et contraintes applicables aux cartes sans contact, de celles applicables aux lecteurs de cartes sans contact, ainsi que des contraintes spécifiques au mode de fonctionnement poste-à-poste.

La norme ISO/IEC 7810 spécifie un format "ID-1" rectangulaire pour des cartes sans contact utilisées principalement dans le domaine du transport et du paiement.

Pour la lecture de cartes sans contact, le format du lecteur et de son antenne n'est pas standardisé. Par contre, le champ magnétique produit par la bobine d'antenne du lecteur doit respecter certaines limites et ses performances sont vérifiées lors de la certification du lecteur. Pour les applications dans le domaine du transport, les tests de certification se basent sur la norme ISO/IEC 10373-6, tandis que le standard "EMV contactless protocol 2.0" est généralement appliqué dans le domaine du paiement.

La bobine d'antenne d'un appareil NFC est généralement plane et s'étend à proximité de la face interne d'une paroi du boîtier de l'appareil, par exemple sa paroi arrière. Une communication en mode poste-à-poste nécessite donc généralement de placer en regard mutuel les parois des deux dispositifs à proximité desquelles sont agencées les bobines d'antenne.

Dans une telle configuration, les bobines d'antenne des deux appareils peuvent être intimement juxtaposées, leurs spires respectives étant en regard mutuel. Les parois arrières des boîtiers étant généralement de faible épaisseur, elles peuvent être très proches l'une de l'autre, généralement à une distance inférieure à 10 millimètres.

La présente invention inclut la constatation que, lorsqu'une faible distance sépare deux bobines d'antenne identiques placées en regard mutuel, il en résulte un fort couplage inductif qui désadapte l'accord en fréquence de chaque bobine d'antenne et fait chuter son coefficient de qualité Q. Cela a pour conséquence de réduire fortement l'amplitude du signal transmis par la bobine d'antenne émettrice et de réduire fortement l'amplitude de la tension reçue par la bobine d'antenne réceptrice. Contre toute attente, ces pertes peuvent être telles qu'elles empêchent alors la communication entre les deux appareils, malgré le fait qu'ils soient très proches l'un de l'autre.

A titre d'exemple, on a évalué les pertes de transmission entre deux bobines d'antenne identiques se faisant face, chaque antenne comportant deux spires planes imbriquées s'étendant le long d'un contour rectangulaire de 31 millimètres (mm)de largeur et de 51 mm de longueur, les plans des bobines d'antenne étant séparés par une distance de 5 mm puis de 1 mm. Avec une distance de séparation de 5 mm, le maximum de transmission est obtenu à une fréquence voisine de 14 MHz au lieu de 13,56 MHz, ce qui trahit une légère désadaptation causée par le couplage, et les pertes de transmission sont de l'ordre de -6 dB. Cela signifie que 50% du champ magnétique est transmis.

Avec une distance de séparation de 1 mm, les bobines d'antenne sont complètement désadaptées avec un coefficient de qualité faible et le maximum de transmission se situe au voisinage des 23 MHz. Le rapprochement des deux bobines d'antenne entraîne donc dans ce cas un décalage important de leur fréquence d'accord, ici de 13,56 MHz à 23 Mhz. De ce fait, les pertes de transmission à 13,56 MHz augmentent énormément puisque les bobines d'antenne ne sont plus accordées sur la fréquence de travail de 13,56 MHz, et sont de l'ordre de -10 dB : 32% seulement du champ magnétique est alors transmis.

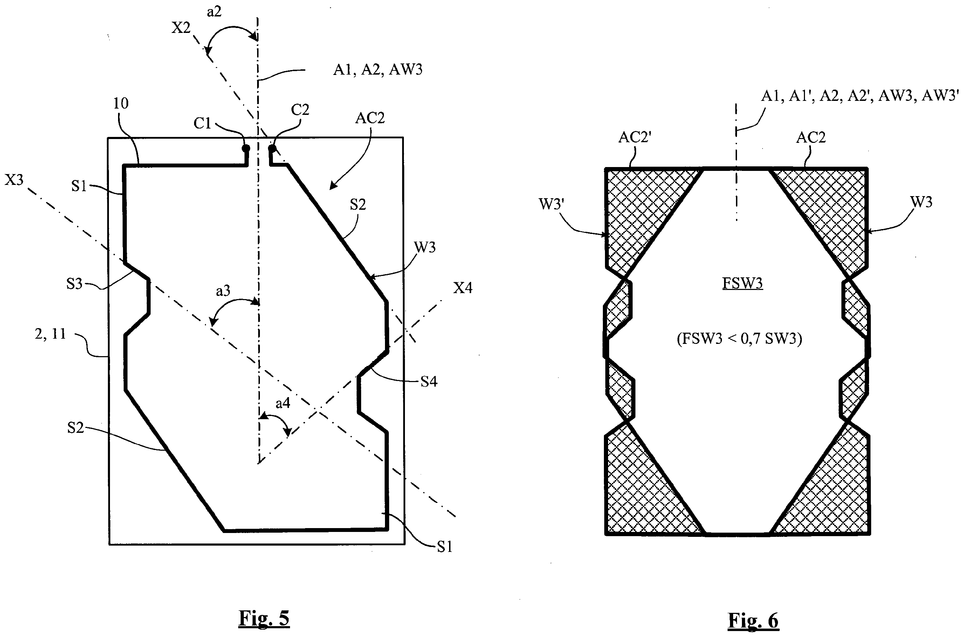

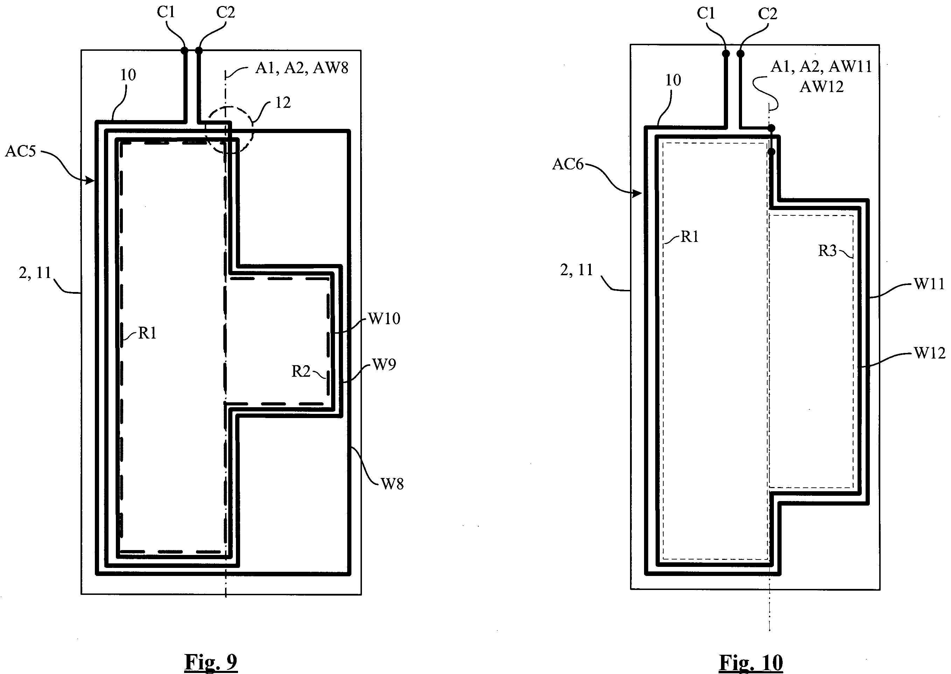

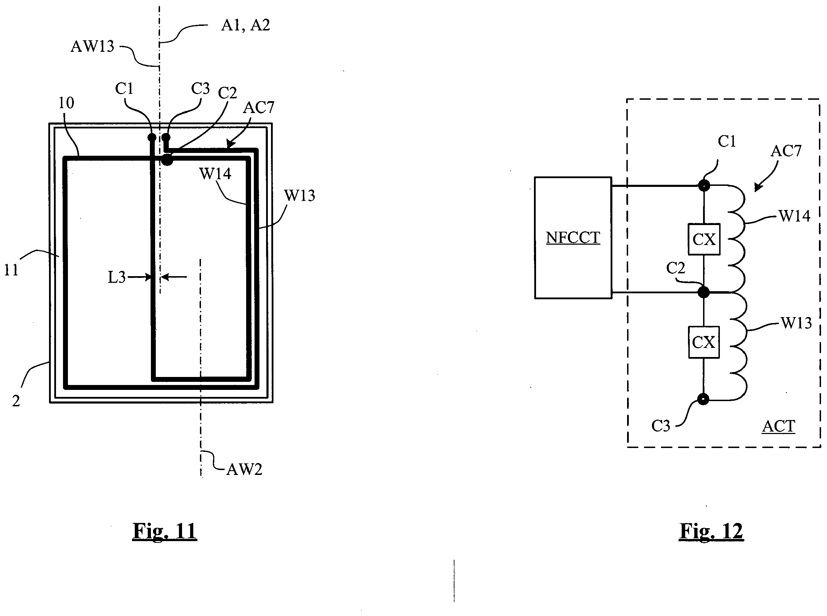

Il pourrait donc être souhaité d'améliorer la qualité d'une communication par couplage inductif entre deux bobines d'antenne planes identiques accordées sur une fréquence de travail, notamment lorsque les bobines d'antenne sont agencées l'une en face de l'autre à une distance inférieure à 10 millimètres. La demande du brevet GB 2 358 991 A, décrit un téléphone NFC qui est destiné à communiquer avec un autre téléphone NFC du même type. La demande de brevet US 2004/0256468 décrit des bobines d'antenne intégrées dans un téléphone NFC destiné à lire des cartes sans contact et dépourvu du mode de communication poste-à-poste. Les bobines d'antenne représentée sur les figures 6, 7A, 8 de ce document présentent une structure symétrique relativement à un axe longitudinal Z du téléphone (Fig. 11), et dissymétrique relativement à un axe X perpendiculaire à l'axe Z. Les bobines d'antenne représentées sur les figures 9 et 10 de ce document comportent quatre spires et présentent une forme dissymétrique relativement à l'axe longitudinal Z, de manière qu'une carte sans contact puisse être lue même lorsqu'elle est agencée à un point distant du centre de la bobine d'antenne, par exemple au dessus d'un clavier 71 du téléphone (Fig. 11).

Des modes de réalisation de l'invention concernent un appareil selon la revendication 1. Selon un mode de réalisation, le nombre N de spires de la bobine d'antenne agencées en série entre les deux points de connexion est au maximum égal à 3.

Selon un mode de réalisation, la bobine d'antenne présente un taux de recouvrement inférieur ou égal à 0,7 quel que soit son nombre de spires.

Selon un mode de réalisation, la bobine d'antenne comprend au moins une spire ayant un taux de recouvrement nul.

Selon un mode de réalisation, la bobine d'antenne comprend au moins une spire composite comprenant deux spires juxtaposées n'ayant aucune surface commune.

Selon un mode de réalisation, la bobine d'antenne comprend au moins une spire d'accord supplémentaire agencée entre l'une des deux bornes de connexion et au moins une troisième borne de connexion, une spire d'accord supplémentaire n'intervenant pas dans la détermination du taux de recouvrement de la bobine d'antenne.

Selon un mode de réalisation, la bobine d'antenne est agencée à proximité d'une paroi de l'appareil présentant un axe longitudinal médian, et la bobine d'antenne présente un axe longitudinal médian confondu avec l'axe longitudinal médian de la paroi.

Selon un mode de réalisation, la bobine d'antenne est agencée à proximité d'une paroi de l'appareil, dans un plan situé à moins de 5 millimètres d'une face externe de la paroi.

Des modes de réalisation de l'invention concernent également un procédé selon la revendication 9. Selon un mode de réalisation, le procédé comprend une étape consistant à choisir un nombre N de spires agencées en série entre les deux points de connexion qui est au maximum égal à Selon un mode de réalisation, le procédé comprend une étape consistant à conférer à chaque bobine d'antenne un taux de recouvrement inférieur ou égal à 0,7 quel que soit son nombre de spires.

Selon un mode de réalisation, le procédé comprend une étape consistant à prévoir dans chaque bobine d'antenne au moins une spire ayant un taux de recouvrement nul.

Selon un mode de réalisation, le procédé comprend une étape consistant à prévoir dans chaque bobine d'antenne au moins une spire composite comprenant deux spires juxtaposées n'ayant aucune surface commune.

Selon un mode de réalisation, le procédé comprend une étape consistant à prévoir dans chaque bobine d'antenne au moins une spire d'accord supplémentaire agencée entre l'une des deux bornes de connexion et au moins une troisième borne de connexion, et ne pas prendre en compte la spire d'accord supplémentaire dans la détermination du taux de recouvrement de la bobine d'antenne.

Des modes de réalisation concernent également un procédé selon la revendication 15. Selon un mode de réalisation, le procédé comprend une étape consistant à choisir un nombre N de spires agencées en série entre les deux points de connexion qui est au maximum égal à Selon un mode de réalisation, le procédé comprend une étape consistant à conférer à chaque bobine d'antenne un taux de recouvrement inférieur ou égal à 0,7 quel que soit son nombre de spires.

Selon un mode de réalisation, le procédé comprend une étape consistant à prévoir dans chaque bobine d'antenne au moins une spire ayant un taux de recouvrement nul.

Selon un mode de réalisation, le procédé comprend une étape consistant à prévoir dans chaque bobine d'antenne au moins une spire composite comprenant deux spires juxtaposées n'ayant aucune surface commune.

Selon un mode de réalisation, le procédé comprend une étape consistant à prévoir dans chaque bobine d'antenne au moins une spire d'accord supplémentaire agencée entre l'une des deux bornes de connexion et au moins une troisième borne de connexion, et ne pas prendre en compte la spire d'accord supplémentaire dans la détermination du taux de recouvrement de la bobine d'antenne.

Selon un mode de réalisation, le procédé comprend les étapes consistant à conférer à la bobine d'antenne une forme présentant un axe longitudinal médian, et agencer la bobine d'antenne à proximité d'une paroi de l'appareil présentant un axe longitudinal médian situé à mi-distance des bords latéraux de la paroi, de manière que l'axe longitudinal médian de la bobine d'antenne soit confondu avec l'axe longitudinal médian de la paroi.

Des modes de réalisation de l'invention sont décrits dans ce qui suit à titre non limitatif en relation avec les figures jointes, parmi lesquelles :

- la figure 1 représente schématiquement un appareil portable incluant des moyens de communication NFC,
- la figure 2 est une vue en coupe schématique de l'appareil de la figure 1 accolé dos à dos avec un appareil identique,
- la figure 3 est une vue de dessus schématique d'un mode de réalisation d'une bobine d'antenne selon l'invention,
- la figure 4 montre deux bobines d'antenne identiques à celle de la figure 3, agencées en regard mutuel maximal,
- la figure 5 est une vue de dessus schématique d'un autre mode de réalisation d'une bobine d'antenne selon l'invention,
- la figure 6 montre deux bobines d'antenne identiques à celle de la figure 5, agencées en regard mutuel maximal,
- les figures 7 à 10 sont des vue de dessus schématiques d'autres modes de réalisation de bobines d'antenne selon l'invention,
- la figure 11 est une vue de dessus schématique d'une variante de la bobine d'antenne de la figure 3, et
- la figure 12 est un schéma électrique de circuit d'antenne comprenant la bobine d'antenne de la figure 11.

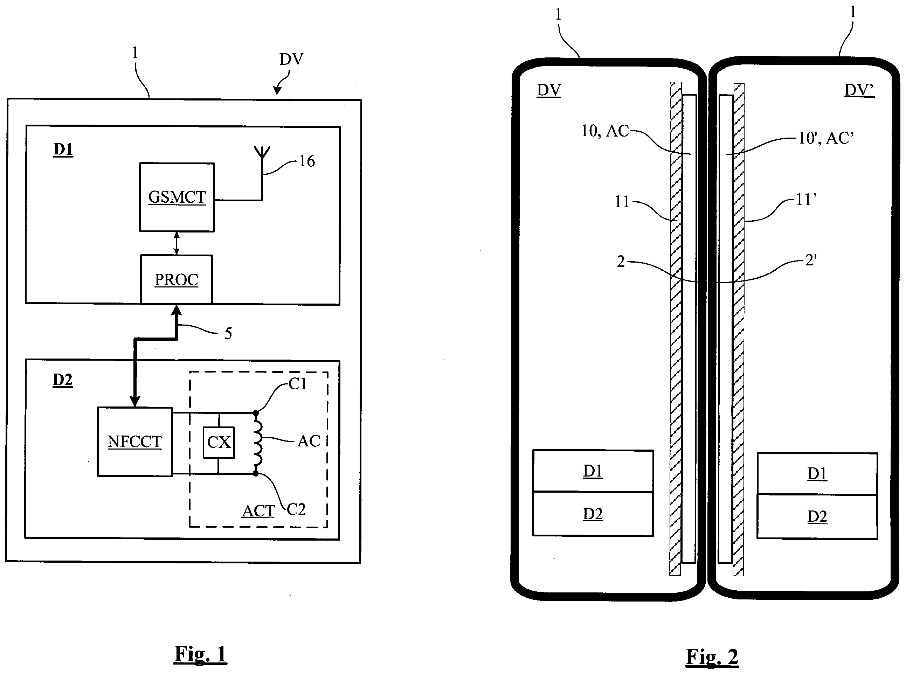

La figure 1 représente un appareil portable DV, par exemple un téléphone mobile. L'appareil DV comprend, agencés dans un boîtier 1, un dispositif applicatif D1 et un dispositif de communication D2. Les dispositifs D1, D2 sont reliés par une interface de communication 5, par exemple un bus de données.

Le dispositif applicatif D1 comprend par exemple un circuit de radiocommunication GSMCT et un processeur PROC. Le circuit GSMCT est relié à une antenne UHF 16 et est configuré pour assurer l'établissement d'une liaison de données avec un réseau de télécommunication. Le processeur PROC est par exemple un processeur en bande de base.

Le dispositif D2 est un dispositif de communication NFC comportant un contrôleur NFC, désigné NFCCT, équipé d'un circuit d'antenne ACT. Le circuit d'antenne ACT comprend une bobine d'antenne AC et des composants CX (condensateurs par exemple) permettant d'accorder la bobine d'antenne AC sur une fréquence de travail, par exemple 13,56 MHz. Le contrôleur NFCCT est configuré pour assurer l'établissement de communications par couplage inductif entre l'appareil DV et un composant NFC externe (non représenté), par l'intermédiaire de la bobine d'antenne AC. Le composant externe peut être une carte à puce sans contact lorsque le dispositif D2 fonctionne en mode lecteur, un lecteur de carte sans contact lorsque le dispositif D2 fonctionne en mode émulation de carte, ou un appareil DV' identique à l'appareil DV lorsque le dispositif DV fonctionne en mode poste-à-poste. Le processeur PROC du dispositif applicatif D1 peut être configuré en tant que processeur hôte du contrôleur NFCCT, pour gérer des applications en mode lecteur ou en mode poste-à-poste.

La figure 2 est une vue en coupe schématique de l'appareil DV montrant également la bobine d'antenne AC vue en coupe. Celle-ci comprend un conducteur plat 10 agencé sur un support isolant 11 et est agencée à proximité d'une paroi 2 du boîtier 1, par exemple sa paroi arrière.

La figure 2 montre également un autre appareil DV' identique à l'appareil DV, ayant une bobine d'antenne AC' identique à la bobine d'antenne AC, et comprenant un conducteur 10' sur un support isolant 11' et agencée à proximité d'une paroi 2' du boîtier 1' du dispositif DV'.

La configuration représentée est celle d'une communication poste-à-poste entre les deux dispositifs DV, DV'. La paroi 2' de l'appareil DV' est accolée à la paroi 2 de l'appareil DV, les bobines d'antenne AC, AC' sont en regard mutuel et très proches l'une de l'autre, généralement à une distance inférieure à 10 millimètres. Les bobines d'antenne sont généralement collées sur la paroi 2 au moyen d'une bande adhésive. Un adhésif double face présente une épaisseur de l'ordre de 30 micromètres, largement inférieure au millimètre. Par ailleurs, une paroi de téléphone mobile peut être localement amincie et présenter une épaisseur inférieure au millimètre. Ainsi, la distance minimale entre deux bobines d'antenne peut être de l'ordre du millimètre.

Des modes de réalisation de l'invention concernent des structures de la bobine d'antenne AC permettant de réduire le désaccord en fréquence de chaque bobine d'antenne AC, AC' lors d'une communication en mode poste-à-poste correspondant à la configuration de la figure 2. On souhaite limiter ce désaccord en fréquence dans une fourchette de plus ou moins 20% lorsque les bobines d'antenne AC, AC' sont agencées en regard mutuel maximal, ce qui correspond en pratique au "pire cas" en termes de désaccord en fréquence.

La présente invention inclut les observations suivantes :

- le désaccord en fréquence augmente lorsque le nombre de spires que comprennent les bobines d'antenne AC, AC' augmente,
- la prévision d'une dissymétrie dans la structure des bobines d'antenne AC, AC' permet de réduire le désaccord en fréquence,
- la dissymétrie des bobines d'antenne AC, AC' doit être plus importante lorsque leur nombre de spires augmente, afin de compenser l'impact du nombre de spires sur le désaccord en fréquence.

Afin de quantifier la dissymétrie nécessaire et de pouvoir déterminer des règles de conception applicables à des bobines d'antenne ayant un nombre de spires différent, la présente invention prévoit un paramètre appelé "taux de recouvrement". Ce taux de recouvrement est déterminé lorsque la bobine d'antenne est agencée en regard mutuel maximal avec elle-même (soit avec une bobine d'antenne identique), et est égal à la somme ∑FSWi des surfaces en regard mutuel FSWi de spires SWi de même rang de la bobine d'antenne, divisé par la somme ∑SWi des surfaces SWi des spires Wi de la bobine d'antenne. L'agencement dit "en regard mutuel maximal" est un agencement dans lequel la somme ∑FSWi des surfaces en regard mutuel FSWi de spires SWi de même rang de la bobine d'antenne est maximale. Cet agencement est généralement obtenu lorsque des axes longitudinaux médians et transversaux médian des deux bobines d'antenne identiques sont alignés (i.e. superposés).

La présente invention inclut également la découverte selon laquelle, pour limiter le désaccord en fréquence de la bobine d'antenne AC dans une fourchette de valeurs acceptables, par exemple de l'ordre de plus ou moins 20%, lorsque celle-ci est agencée en regard mutuel maximal d'une bobine d'antenne identique AC', la bobine d'antenne AC doit présenter, relativement à sont axe longitudinal médian ou transversal médian, une dissymétrie correspondant à un taux de recouvrement inférieur ou égal à 0,6 si elle comporte 4 spires ou plus, inférieur ou égal à 0,7 si elle comporte 3 spires, ou inférieur ou égal à 0,8 si elle comporte 1 ou 2 spires.

Il apparaîtra clairement par la suite que l'axe selon lequel une bobine d'antenne AC présente une dissymétrie doit être l'axe selon lequel elle est mise en regard mutuel avec la bobine d'antenne AC' lors d'une application poste-à-poste. Cet axe est généralement l'axe longitudinal médian de la bobine d'antenne si celui-ci est parallèle ou confondu avec l'axe longitudinal médian du boîtier 1, car les appareils DV, DV' sont généralement agencés dans la même direction lorsqu'ils sont accolés en mode poste-à-poste. S'il est demandé aux utilisateurs des appareils de les orienter dans des directions inverses lors d'une communication poste-à-poste (soit tête-bêche), la dissymétrie sera alors prévue relativement à un axe de la bobine d'antenne qui est transversal à l'axe longitudinal médian de la paroi 2 du boîtier. Dans un souci de simplification du langage, on appellera par la suite "axe longitudinal médian" d'une bobine d'antenne l'axe de la bobine d'antenne qui est parallèle à ou confondu avec l'axe longitudinal médian de la paroi du boîtier portant la bobine d'antenne, y compris dans l'hypothèse ou l'axe longitudinal médian géométrique de la bobine d'antenne est transversal à cet axe (cas d'une bobine d'antenne qui ne s'étendrait pas sur toute la longueur de la paroi et présenterait une forme rectangulaire transversalement à celle-ci).

Des modes de réalisation AC1, AC2, AC3, AC4, AC5, AC5 de la bobine d'antenne AC seront maintenant décrits.

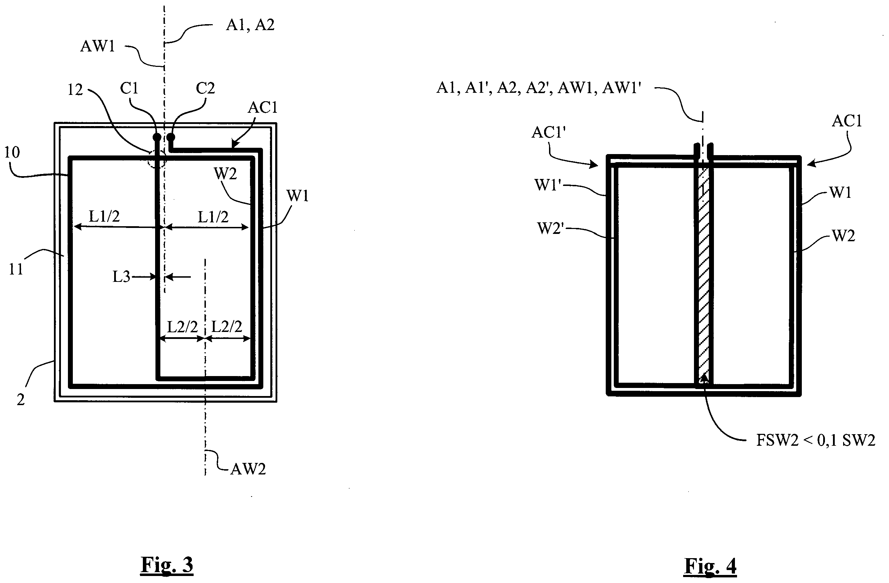

La bobine d'antenne AC1 représentée sur la figure 3 comprend une première spire W1 de forme sensiblement rectangulaire (le schéma montre des angles vifs qui pourraient être arrondis en pratique) et une seconde spire W2 également de forme rectangulaire, s'étendant à l'intérieur de la spire W1. Les spires W1, W2 sont formées par le conducteur 10 sur le support isolant 11, dont les extrémités sont connectées à des bornes de connexion ou contacts C1, C2 reliés au contrôleur NFCCT (Cf. Fig. 1). Le conducteur 10 présente ici une zone de croisement ou de chevauchement 12 où il passe au-dessus de lui-même par l'intermédiaire d'une couche isolante (non représentée). Dans d'autres modes de réalisation, la zone de chevauchement pourrait être assurée par un autre conducteur, enterré dans le support isolant 11.

Afin de maximiser la surface de la bobine d'antenne AC et augmenter la distance de communication du dispositif DV en mode lecteur de carte ou en mode émulation de carte, la spire W1 occupe ici la majeure partie de la surface de la paroi 2. La spire W1 présente ainsi un axe longitudinal médian AW1 qui est confondu avec un axe longitudinal médian A2 de la paroi 2 (axe qui s'étend à mi-distance des bords de la paroi 2). L'axe AW1 forme également l'axe longitudinal médian global A1 de la bobine d'antenne AC1, c'est-à-dire un axe situé à mi-distance des bords latéraux extrêmes de la bobine d'antenne. Sur la figure 3, "L1" désigne la largeur de la spire W1. Les axes AW1, A1 sont donc à une distance égale à L1/2 des deux bords de la spire W1.

La spire W2 est d'une largeur L2 inférieure à L1 et présente, à mi-distance de ses bords (L2/2), un axe longitudinal médian AW2 qui est décalé relativement à l'axe longitudinal médian A1, AW1. Plus précisément, le bord gauche de la spire W2 s'étend ici à une distance L3 de l'axe longitudinal médian A1, AW1 représentant 5% de sa largeur L2.

Lorsque la bobine d'antenne AC1 est agencée en regard mutuel maximal avec une bobine d'antenne AC1' identique, comme représenté sur la figure 4, la surface en regard mutuel FSW2 de la spire W2 de la bobine d'antenne AC1 et d'une spire W2' de même rang de la bobine d'antenne AC1' est égale à 1/10 de la surface SW2 de la spire W2. Dans cet agencement, la surface en regard mutuel FSW1 de la spire W1 de la bobine d'antenne AC1 et d'une spire W1' de même rang de la bobine d'antenne AC1' est égale à la surface SW1 de la spire W1 car la spire W1 est parfaitement symétrique.

Le taux de recouvrement peut donc être calculé en considérant que la surface SW1 de la spire W1 est égale à 1 (surface de référence ramenée à l'unité) et en considérant à titre d'exemple que la surface SW2 de la spire W2 est égale à la moitié de celle de la spire W1. Il vient que :

- surface SW1 de la spire W1 = 1
- surface SW2 de la spire W2 = 0,5
- surface FSW1 de la spire W1 en regard de la spire W1' = 1
- surface FSW2 de la spire W2 en regard de la spire W2' = 0,1 x SW2 = 0,1 x 0,5 = 0,05
- $\sum$FSWi = 1 + 0,05 = 1,05
- $\sum$SWi = 1,5

Le taux de recouvrement est donc égal à :

$$\sum FSWi/\sum SWi = 1,05/1,5 = 0,7$$

Dans un mode de réalisation, la distance L3 est égale à 0. Dans ce cas, l'aire couverte par la spire W2 ne comporte aucune partie à gauche de l'axe longitudinal médian A1 de la bobine d'antenne et la spire présente un taux de recouvrement individuel égal à zéro (dissymétrie totale). La bobine d'antenne AC1 présente alors un taux de recouvrement égal à 1/1,5 soit 0,66. Dans un autre mode de réalisation, la spire W2 présente un taux de recouvrement individuel égal à 0 et une surface égal à 0,45 fois la surface de la spire W1. Dans ce cas la bobine d'antenne AC1 présente un taux de recouvrement égal à 1/1,45 soit 0,69.

La figure 5 représente une bobine d'antenne AC2 ne comportant qu'une spire W3, de forme non symétrique. La spire W3 présente un axe longitudinal médian AW3 qui forme l'axe longitudinal médian global A1 de la bobine et qui est confondu avec l'axe longitudinal médian A2 de la paroi 2. La spire W3 présente des sections droites S1 du conducteur 10 qui sont parallèles à l'axe AW3 et des sections droites S2, S3, S4 du conducteur 10 qui suivent des directions X2, X3, X4 présentant des angles a2, a3, a4 compris entre 10 et 80° relativement à l'axe longitudinal médian AW3.

Comme montré sur la figure 6, la forme de la spire est déterminée ici pour qu'elle présente un taux de recouvrement inférieur à 0,7 :

- surface SW3 de la spire W3 = 1 (surface ramenée à l'unité),
- surface FSW3 de la spire W3 en regard d'une spire W3' d'une bobine d'antenne AC2' identique à AC2 = 0,7,
- $\sum$FSWi = FSW3 = 0,7
- $\sum$SWi = SW3 = 1
- $\sum$FSWi/$\sum$SWi = 0,7/1 = 0,7

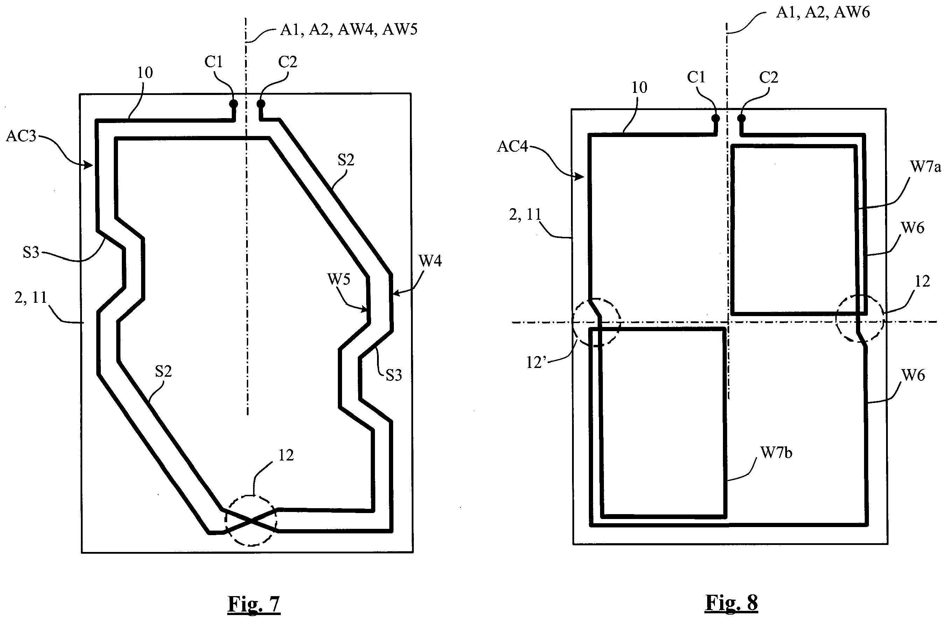

La figure 7 représente une bobine d'antenne AC3 comprenant deux spires W4, W5, la spire W5 s'étendant à l'intérieur de la spire W4. Le conducteur 10 présente un point de croisement 12 situé sur la partie inférieure des spires, à l'opposé des contacts C1, C2. Les spires W4, W5 ont sensiblement la même forme que la spire W3 précédemment décrite, et présentent chacune un taux de recouvrement individuel inférieur à 0,7. Il vient que le taux de recouvrement de la bobine d'antenne AC3 considérée dans son ensemble est également inférieur à 0,7.

La figure 8 représente une bobine d'antenne AC4 comprenant une grande spire W6 de forme sensiblement rectangulaire, à l'intérieur de laquelle s'étend une spire composite W7 constituée de deux spires W7a, W7b juxtaposées et disjointes (i.e. ne comportant pas de surface commune) qui sont également de forme sensiblement rectangulaire. La bobine d'antenne AC4 présente un axe longitudinal médian A1 correspondant à l'axe longitudinal médian AW6 de la spire W6 et coïncidant ici avec l'axe longitudinal médian de la paroi 2 de l'appareil. Le conducteur 10 formant la bobine d'antenne présente deux zones de croisement 12, 12' à proximité des spires W7a, W7b.

Les spires W7a, W7b sont juxtaposées de manière à ce que la spire composite résultante W7 présente un taux de recouvrement individuel égal à 0. Plus particulièrement, la spire W7a présente une surface inférieure ou égale au quart de la surface de la spire W6 et est agencée dans le cadran supérieur droit de la spire W6. La spire W7b présente une surface inférieure ou égale au quart de la surface de la spire W6 et est agencée dans le cadran inférieur gauche de la spire W6.

Ainsi, lorsque la bobine d'antenne AC4 est agencée en regard mutuel maximal d'une bobine d'antenne AC4' identique, la spire W7a n'est pas en regard des spires correspondante W7a', W7b' de la bobine d'antenne AC4' et la spire W7b n'est pas en regard des spires correspondante W7a', W7b' de la bobine d'antenne AC4', la spire composite W7 présentant donc un taux de recouvrement égal à 0. Si la surface de chaque spire W7a, W7b est égale à 1/4 de la surface de la spire W6, le taux de recouvrement de la bobine d'antenne AC4 est égal à (1+0+0)/(1+0,25+0,25) soit 1/1,5, soit encore 0,66.

La figure 9 représente une bobine d'antenne AC5 comprenant une grande spire sensiblement rectangulaire W8 et deux spires bi-rectangulaires, la spire W9 s'étendant à l'intérieur de la spire W8 et la spire W10 à l'intérieur de la spire W9. La spire W8 présente un axe longitudinal médian AW8 formant l'axe longitudinal médian A1 de la bobine d'antenne AC5, qui est ici confondu avec l'axe longitudinal médian A2 de la paroi 2 du boîtier. Les spires W9, W10 parcourent chacune un trajet correspondant au périmètre d'une forme constituée de deux rectangles R1, R2 agencés côte à côte et de part et d'autre de l'axe longitudinal médian A1. Le rectangle R2 présente la même largeur que le rectangle R1 et une longueur égale au quart de la longueur du rectangle R2. De ce fait, le taux de recouvrement individuel de chaque spire W9, W10 est égal à deux fois la surface de R2 divisé par la surface de R1 plus la surface de R2, soit 2*1*0,25/(1+0,25) en considérant que la surface du rectangle R1 est égale à 1, soit un taux de recouvrement égal à 0,4.

En négligeant la surface du conducteur 10 formant les spires et la distance entre les spires W8 à W10, et en considérant que la spire W8 présente une surface de 1, que le rectangle R1 présente une surface de 0,5 et le rectangle R2 une surface de 0,25, le taux de recouvrement de la bobine d'antenne AC5 est calculé de la manière suivante :

- surface SW8 de la spire W8 = 1 (surface ramenée à l'unité),
- surface SW9 de la spire W9 = 0,5 + 0,25 x 0,5 = 0,625
- surface SW10 de la spire W10 = 0,5 + 0,25 x 0,5 = 0,625
- surface FSW8 de la spire W8 en regard d'une spire W8' d'une bobine d'antenne AC5' identique à AC5 = 1
- surface FSW9 de la spire W9 en regard d'une spire W9' de la bobine d'antenne AC5' = 2 x 0,5 x 0,25 = 0,25
- surface FSW10 de la spire W10 en regard d'une spire W10 de la bobine d'antenne AC5' = 2 x 0,5 x 0,25 = 0,25
- $\Sigma$FSWi = 1 + 0,25 + 0,25 = 1,5
- $\Sigma$SWi = 1 + 0,625 + 0,625 = 2,25

Soit :

$$\Sigma FSWi / \Sigma SWi = 1,5/2,25 = 0,66$$

La figure 10 représente une bobine d'antenne AC6 comprenant deux spires W11, W12 bi-rectangulaires parcourant chacune un trajet correspondant au périmètre d'une forme constituée de deux rectangles R1, R3 agencés côte à côte. Les spires W11, W12 présentent un axe longitudinal médian AW11, AW12 qui forme l'axe longitudinal médian A1 de la bobine d'antenne AC6 et qui est confondu ici avec l'axe longitudinal médian A2 de la paroi 2 du boîtier. Les rectangles R1 et R3 ont la même largeur et sont agencés de part et d'autre de l'axe A1. On suppose par exemple que le rectangle R3 est d'une longueur égale à la moitié de la longueur du rectangle R1 (le schéma de la figure 10 étant approximatif). Dans ce cas, en considérant que la surface du rectangle R1 est égale à 1 et la surface du rectangle R3 égale à 0,5, le taux de recouvrement individuel de chaque spire W11, W12 est égal à 2 fois la surface de R3 divisé par la somme de la surface de R3 et la surface de R1, soit (2 x 0,5)/1,5, soit encore 0,66. Les spires ayant la même forme, et en négligeant la surface du conducteur 10 et la distance interspire, le taux de recouvrement de la bobine d'antenne AC6 est sensiblement égal au taux de recouvrement individuel de chacune des spires, soit 0,66.

La présente invention s'applique également à des bobines d'antenne à prises multiples ("multi taps") du type décrit dans la demande internationale WO 2010/066799. Ce type de bobine d'antenne comprend au moins une spire d'accord supplémentaire agencée entre l'une des deux bornes de connexion C1, C2 de la bobine d'antenne au contrôleur NFCCT, et au moins une troisième borne de connexion C3. Dans ce cas, la spire d'accord supplémentaire n'intervient pas dans la détermination du taux de recouvrement de la bobine d'antenne mais est prise en compte pour la détermination de l'agencement en regard mutuel maximal, à partir duquel le taux de recouvrement est calculé.

Un exemple de bobine d'antenne AC7 à prises multiples est représenté sur la figure 11. Dans cet exemple, la bobine d'antenne AC7 est de même forme que la bobine d'antenne AC1 de la figure 3 et comprend une grande spire W13 de même forme que la spire W1 de la figure 3, et une petite spire W14 de même forme que la spire W2 de la figure 3.

La bobine d'antenne AC7 se distingue de la bobine d'antenne AC1 en ce que le contact C2 est agencé en terminaison de la spire W14, et en ce qu'un contact C3 est agencé en terminaison de la spire W13. Ainsi, la spire W14 s'étend entre les contacts C1 et C2 et la spire W13 s'étend entre les contacts C2 et C3.

Un schéma électrique représenté sur la figure 12 montre que la spire W14 est reliée au contrôleur NFCCT par l'intermédiaire des contacts C1, C2, tandis que la spire W13 est utilisée comme spire d'accord supplémentaire. Ainsi, des composants d'accord CX peuvent être agencés entre les bornes C1 et C2 et/ou entre les bornes C2 et C3, et/ou entre les bornes C1 et C3.

Dans un tel mode de réalisation, le taux de recouvrement de la bobine d'antenne est déterminé relativement à la spire W14 uniquement, relativement à un agencement de la bobine d'antenne en regard mutuel maximal avec une bobine d'antenne similaire AC7' (Cf. par exemple la figure 4). L'agencement en regard mutuel maximal est par contre déterminé en tenant compte de toutes les spires W13, W14 de la bobine d'antenne. Conformément à la définition décrite précédemment, l'agencement en regard mutuel maximal est donc un agencement dans lequel la somme $\Sigma$FSWi des surfaces en regard mutuel FSWi de spires SWi de même rang de la bobine d'antenne est maximale. Une fois l'agencement en regard mutuel maximal déterminé, la spire W13 n'est pas prise en compte pour le calcul du taux de recouvrement de la bobine d'antenne AC7, qui est donc égal ici aux taux de recouvrement individuel de la spire W14. Le taux de recouvrement individuel de la spire W14 est égal à 0,1 si le bord gauche de la spire W14 s'étend à gauche de l'axe longitudinal médian A1 de la bobine d'antenne, à une distance L3 qui est égale à 5% de la largeur de la spire W14.

Il apparaîtra clairement à l'homme de l'art que la présente invention est susceptible de diverses autres variantes de réalisation et applications. Des modes de réalisation de l'invention s'appliquent de façon générale à toute application dans laquelle deux bobines d'antenne accordées doivent être agencées en regard mutuel et à une faible distance l'une de l'autre, lorsque cette faible distance est susceptible de désaccorder les bobines d'antenne et de réduire la transmission du signal électrique entre les deux bobines d'antenne.

## Revendications

1. Appareil (DV) comprenant des moyens de communication par couplage inductif (D2, ACT) configurés pour communiquer en mode poste-à-poste avec un autre appareil (DV'), les moyens de communication comprenant un contrôleur de communication (NFCCT) et une bobine d'antenne plane (AC, AC1-AC7) accordée sur une fréquence de travail, reliée au contrôleur par l'intermédiaire de deux points de connexion (C1, C2) et comportant N spires (Wi, W1-W14) agencées en série entre les deux points de connexion,
   **caractérisé en ce que** :

   - la bobine d'antenne présente, relativement à un axe longitudinal médian ou transversal médian de la bobine d'antenne, une dissymétrie correspondant à un taux de recouvrement inférieur ou égal à 0,6 si elle comporte 4 spires ou plus, inférieur ou égal à 0,7 si elle comporte 3 spires, ou inférieur ou égal à 0,8 si elle comporte 1 ou 2 spires,

   le taux de recouvrement étant égal à la somme ($\sum$FSWi) des surfaces en regard mutuel (FSWi) de spires de même rang (SWi) divisé par la somme ($\sum$SWi) des surfaces (SWi) des spires (Wi) de la bobine d'antenne, lorsque la bobine d'antenne est agencée en regard mutuel maximal avec une bobine d'antenne identique (AC', AC1', AC2').

2. Appareil selon la revendication 1, dans lequel le nombre N de spires de la bobine d'antenne agencées en série entre les deux points de connexion est au maximum égal à 3.

3. Appareil selon la revendication 2, dans lequel la bobine d'antenne présente un taux de recouvrement inférieur ou égal à 0,7 quel que soit son nombre de spires.

4. Appareil selon l'une des revendications 1 à 3, dans lequel la bobine d'antenne comprend au moins une spire (W7, W7a, W7b) ayant un taux de recouvrement nul.

5. Appareil selon l'une des revendications 1 à 4, dans lequel la bobine d'antenne comprend au moins une spire composite (W7, W7a, W7b) comprenant deux spires juxtaposées (Wa, W7b) n'ayant aucune surface commune.

6. Appareil selon l'une des revendications 1 à 5, dans lequel la bobine d'antenne (AC7) comprend au moins une spire d'accord supplémentaire (W13) agencée entre l'une (C2) des deux bornes de connexion et au moins une troisième borne de connexion (C3), une spire d'accord supplémentaire n'intervenant pas dans la détermination du taux de recouvrement de la bobine d'antenne.

7. Appareil selon l'une des revendications 1 à 6, dans lequel :

   - la bobine d'antenne (AC1) est agencée à proximité d'une paroi (2) de l'appareil présentant un axe longitudinal médian (A2),
   - la bobine d'antenne présente un axe longitudinal médian (A1) confondu avec l'axe longitudinal médian (A2) de la paroi.

8. Appareil selon l'une des revendications 1 à 7, dans lequel la bobine d'antenne est agencée à proximité d'une paroi (2) de l'appareil, dans un plan situé à moins de 5 millimètres d'une face externe de la paroi.

9. Procédé pour établir un couplage inductif entre une première et une seconde bobine d'antenne planes (AC, AC1-AC7) identiques accordées sur une fréquence de travail, comprenant l'étape consistant à :

   - agencer les bobines d'antenne l'une en face de l'autre à une distance inférieure à 10 millimètres, chaque bobine d'antenne comportant N spires (Wi, W1-W14) agencées en série entre deux points de connexion (C1, C2) de la bobine d'antenne,

   **caractérisé en ce qu'**il comprend l'étape consistant à :

   - conférer à chaque bobine d'antenne, relativement à un axe longitudinal médian ou transversal médian de la bobine d'antenne, une dissymétrie correspondant à un taux de recouvrement inférieur ou égal à 0,6 si elle comporte 4 spires ou plus, inférieur ou égal à 0,7 si elle comporte 3 spires, ou inférieur ou égal à 0,8 si elle comporte 1 ou 2 spires,

   le taux de recouvrement étant égal à la somme ($\sum$FSWi) des surfaces en regard mutuel (FSWi) de spires de même rang (SWi) divisé par la somme ($\sum$SWi) des surfaces (SWi) des spires (Wi) de la bobine d'antenne, lorsque les bobines d'antenne sont en regard mutuel maximal.

10. Procédé selon la revendication 9, comprenant une étape consistant à choisir un nombre N de spires agencées en série entre les deux points de connexion qui est au maximum égal à 3.

11. Procédé selon la revendication 10, comprenant une étape consistant à conférer à chaque bobine d'antenne un taux de recouvrement inférieur ou égal à 0,7 quel que soit son nombre de spires.

12. Procédé selon l'une des revendications 9 à 11, comprenant une étape consistant à prévoir dans chaque bobine d'antenne au moins une spire (W7, W7a, W7b) ayant un taux de recouvrement nul.

13. Procédé selon l'une des revendications 9 à 12, comprenant une étape consistant à prévoir dans chaque bobine d'antenne au moins une spire composite (W7, W7a, W7b) comprenant deux spires juxtaposées (W7a, W7b) n'ayant aucune surface commune.

14. Procédé selon l'une des revendications 9 à 13, comprenant une étape consistant à prévoir dans chaque bobine d'antenne (AC7) au moins une spire d'accord supplémentaire (W13) agencée entre l'une (C2) des deux bornes de connexion et au moins une troisième borne de connexion (C3), et ne pas prendre en compte la spire d'accord supplémentaire dans la détermination du taux de recouvrement de la bobine d'antenne.

15. Procédé pour établir une communication par couplage inductif entre deux appareils (DV, DV') selon l'une des revendications 1 à 8,
procédé comprenant une étape consistant à placer des parois (2, 2') desdits deux appareils en regard mutuel de manière que les bobines d'antenne soient agencées l'une en face de l'autre à une distance inférieure à 10 millimètres.

**Patentansprüche**

1. Vorrichtung (DV) umfassend Mittel zur Kommunikation durch induktive Kopplung (D2, ACT) konfiguriert, um in einem Modus Station zu Station mit einer anderen Vorrichtung (DV') zu kommunizieren, wobei die Mittel der Kommunikation eine Kommunikationssteuerung (NFCCT) und eine ebene Antennenspule (AC, AC1 - AC7), abgestimmt auf eine Arbeitsfrequenz, umfassen, welche mit der Steuerung durch zwei Verbindungspunkte (C1, C2) verbunden sind und N Windungen (Wi, W1 - W14) umfassen, die in Reihe zwischen den zwei Verbindungspunkten angeordnet sind,
**dadurch gekennzeichnet, dass**:

- die Antennenspule, relativ zu einer Längsmittel- oder Quermittelachse der Antennenspule eine fehlende Symmetrie aufweist, welche zu einem Bedeckungsgrad kleiner oder gleich 0,6, wenn sie 4 Windungen oder mehr umfasst, kleiner oder gleich 0,7, wenn sie 3 Windungen umfasst, oder kleiner oder gleich 0,8, wenn sie 1 oder 2 Windungen umfasst, korrespondiert,

der Bedeckungsgrad gleich der Summe ($\Sigma FSWi$) der sich gegenüberliegenden Oberflächen (FSWi) der Windungen gleichen Ranges (SWi) geteilt durch die Summe ($\Sigma SWi$) der Oberflächen (SWi) der Windungen (Wi) der Antennenspule ist, wenn die Antennenspule maximal gegenüberliegend mit einer identischen Antennenspule (AC', AC1', AC2') angeordnet ist.

2. Vorrichtung nach Anspruch 1, in dem die Anzahl N der Windungen der Antennenspule, die in Reihe zwischen den beiden Verbindungspunkten angeordnet sind, höchstens gleich 3 ist.

3. Vorrichtung nach Anspruch 2, in dem die Antennenspule einen Bedeckungsgrad kleiner oder gleich 0,7 unabhängig von der Anzahl der Windungen aufweist.

4. Vorrichtung nach einem der Ansprüche 1 bis 3, in dem die Antennenspule zumindest eine Windung (W7, W7a, W7b) mit einem Bedeckungsgrad null umfasst.

5. Vorrichtung nach einem der Ansprüche 1 bis 4, in dem die Antennenspule zumindest eine zusammengesetzte Windung (W7, W7a, W7b) umfasst, die zwei nebeneinanderliegende Windungen (Wa, W7b) umfasst, die keine gemeinsame Oberfläche aufweisen.

6. Vorrichtung nach einem der Ansprüche 1 bis 5, in dem die Antennenspule (AC7) zumindest eine zusätzliche Abgleichspule (W13), welche zwischen dem einen (C2) der beiden Anschlüsse und zumindest einem dritten Anschluss (C3) angeordnet ist, umfasst, eine zusätzliche Abgleichspule nicht in den Bestimmung des Bedeckungsgrads der Antennenspule eingeht.

7. Vorrichtung nach einem der Ansprüche 1 bis 6, in dem :

- die Antennenspule (AC1) in der Nähe einer Wand (2) der Vorrichtung angeordnet ist, die eine Längsmittelachse (A2) aufweist,
- die Antennenspule eine Längsmittelachse (A1) aufweist, die sich mit der Längsmittelachse (A2) der Wand überlagert.

8. Vorrichtung nach einem der Ansprüche 1 bis 7, in dem die Antennenspule in der Nähe einer Wand (2) der Vorrichtung in einer Ebene angeordnet ist, die weniger als 5 Millimeter von einer externen Oberfläche der Wand entfernt ist.

9. Verfahren zum Herstellen einer induktiven Kopplung zwischen einer identischen ersten und einer zweiten ebenen Antennenspule (AC, AC1 - AC7), die auf eine Arbeitsfrequenz abgestimmt sind, umfassend den Schritt bestehend aus:

- Anordnen der Antennenspulen einander gegenüberliegend mit einem Abstand kleiner als 10 Millimeter, wobei jede Antennenspule N Windungen (Wi, W1 - W14) umfasst, die in Reihe zwischen zwei Verbindungspunkten (C1, C2) der Antennenspule angeordnet sind,

**dadurch gekennzeichnet, dass** es den Schritt umfasst, bestehend aus:

- Verleihen an jede Antennenspule, in Bezug auf eine Längsmittelachse oder Quermittelachse der Antennenspule, einer fehlenden Symmetrie, die zu einem Bedeckungsgrad kleiner oder gleich 0,6, wenn sie 4 Windungen oder mehr umfasst, kleiner oder gleich 0,7, wenn sie 3 Windungen umfasst, oder kleiner oder gleich 0,8, wenn sie 1 oder 2 Windungen umfasst, korrespondiert,

der Bedeckungsgrad gleich der Summe (ΣFSWi) der sich gegenüberliegenden Oberflächen (FSWi) der Windungen gleichen Ranges (SWi) geteilt durch die Summe (ΣSWi) der Oberflächen (SWi) der Windungen (Wi) der Antennenspule ist, wenn die Antennenspulen maximal gegenüberliegend angeordnet sind.

10. Verfahren nach Anspruch 9, umfassend einen Schritt, bestehend aus Auswählen einer Anzahl N von Windungen, die in Reihe zwischen den beiden Verbindungspunkten angeordnet sind, die höchstens gleich 3 ist.

11. Verfahren nach Anspruch 10, umfassend einen Schritt, bestehend aus Verleihen jede Antennenspule einen Bedeckungsgrad kleiner oder gleich 0,7 unabhängig von der Anzahl der Windungen.

12. Verfahren nach einem der Ansprüche 9 bis 11, umfassend einen Schritt, bestehend aus Vorsehen in jeder Antennenspule zumindest einer Windung (W7, W7a, W7b) mit einem Bedeckungsgrad null.

13. Verfahren nach einem der Ansprüche 9 bis 12, umfassend einen Schritt, bestehend aus Vorsehen in jeder Antennenspule zumindest einer zusammengesetzten Windung (W7, W7a, W7b), die zwei nebeneinanderliegende Windungen (W7a, W7b) umfasst, die keine gemeinsame Oberfläche aufweisen.

14. Verfahren nach einem der Ansprüche 9 bis 13, umfassend einen Schritt, bestehend aus Vorsehen in jeder Antennenspule (AC7) zumindest eine zusätzliche Abgleichspule (W13), welche zwischen der einen (C2) der beiden Anschlüsse und zumindest einem dritten Anschluss (C3) angeordnet ist, und nicht Berücksichtigen einer zusätzlichen Abgleichspule in der Bestimmung des Bedeckungsgrads der Antennenspule.

15. Verfahren zum Herstellen einer Kommunikation durch induktive Kopplung zwischen zwei Apparaten (DV, DV') gemäß einem der Ansprüche 1 bis 8, wobei das Verfahren einen Schritt umfasst, bestehend aus Anordnen von Wänden (2, 2') der beiden Vorrichtungen gegenüberliegend der Art, dass die Antennenspulen mit einem Abstand unter 10 Millimeter gegenüberliegend angeordnet sind.

**Claims**

1. Apparatus (DV) comprising inductive coupling communication means (D2, ACT) configured to communicate in peer-to-peer mode with another apparatus (DV'), the communication means comprising a communication controller (NFCCT) and a planar antenna coil (AC, AC1-AC7) tuned to a working frequency, linked to the controller by means of two connection points (C1, C2) and comprising N loops (Wi, W1-W14) arranged in series between the two connection points,
**characterized in that**:

- the antenna coil presents, relative to a longitudinal median or a transversal median axis of the antenna coil, an asymmetry corresponding to a coverage rate less than or equal to 0.6 if it comprises 4 or more loops, less than or equal to 0.7 if it comprises 3 loops, or less than or equal to 0.8 if it comprises 1 or 2 loops,

the coverage rate being equal to the sum (ΣFSWi) of mutually opposite surfaces (FSWi) of loops of the same rank (SWi) divided by the sum (ΣSWi) of surfaces (SWi) of loops (Wi) of the antenna coil, when the antenna coil is arranged in maximum mutual opposition with an identical antenna coil (AC', AC1', AC2').

2. Apparatus according to claim 1, wherein the number N of loops of the antenna coil arranged in series between the two connection points is at most equal to 3.

3. Apparatus according to claim 2, wherein the antenna coil presents a coverage rate less than or equal to 0.7, irrespective of the number of loops it has.

**4.** Apparatus according to one of claims 1 to 3, wherein the antenna coil comprises at least one loop (W7, W7a, W7b) having a zero coverage rate.

**5.** Apparatus according to one of claims 1 to 4, wherein the antenna coil comprises at least one composite loop (W7, W7a, W7b) comprising two juxtaposed loops (Wa, W7b) not having any common surface.

**6.** Apparatus according to one of claims 1 to 5, wherein the antenna coil (AC7) comprises at least one supplementary tuning loop (W13) arranged between one (C2) of the two connection points and at least a third connection point (C3), a supplementary tuning loop not intervening in the determination of the coverage rate of the antenna coil.

**7.** Apparatus according to one of claims 1 to 6, wherein:

- the antenna coil (AC1) is arranged proximate one wall (2) of the apparatus presenting a longitudinal median axis (A2),
- the antenna coil presents a longitudinal median axis (A1) that is the same as the longitudinal median axis (A2) of the wall.

**8.** Apparatus according to one of claims 1 to 7, wherein the antenna coil is arranged proximate one wall (2) of the apparatus, in a plane situated at less than 5 millimeters from an external face of the wall.

**9.** Method of establishing an inductive coupling between first and second identical planar antenna coils (AC, AC1-AC7) turned to a working frequency, comprising a step of:

- arranging the antenna coils opposite each other at a distance less than 10 millimeters, each antenna coil comprising N loops (Wi, W1-W14) arranged in series between two connection points (C1, C2) of the antenna coil,

**characterized in that** it comprises:

- conferring to each antenna coil, relative to a longitudinal median or a transversal median axis of the antenna coil, an asymmetry corresponding to a coverage rate less than or equal to 0.6 comprises 4 or more loops, less than or equal to 0.7 if it comprises 3 loops, or less than or equal to 0.8 if it comprises 1 or 2 loops,

the coverage rate being equal to the sum ($\Sigma$FSWi) of mutually opposite surfaces (FSWi) of loops of the same rank (SWi) divided by the sum ($\Sigma$SWi) of surfaces (SWi) of loops (Wi) of the antenna coil, when the antenna coils are in maximum mutual opposition.

**10.** Method according to claim 9, comprising a step of choosing a number N of loops arranged in series between the two connection points that is at most equal to 3.

**11.** Method according to claim 10, comprising a step of conferring to each antenna coil a coverage rate less than or equal to 0.7, irrespective of the number of loops it has.

**12.** Method according to one of claims 9 to 11, comprising a step of providing in each antenna coil at least one loop (W7, W7a, W7b) having a zero coverage rate.

**13.** Method according to one of claims 9 to 12, comprising a step of providing in each antenna coil at least one composite loop (W7, W7a, W7b) comprising two juxtaposed loops (W7a, W7b) not having any common surface.

**14.** Method according to one of claims 9 to 13, comprising a step of providing in each antenna coil (AC7) at least one supplementary tuning loop (W13) arranged between one (C2) of the two connection points and at least a third connection point (C3), and not taking into consideration the supplementary tuning loop in the determination of the coverage rate of the antenna coil.

**15.** Method for establishing an inductive coupling communication between two apparatuses (DV, DV') according to one of claims 1 to 8,
the method comprising placing walls (2, 2') of said two apparatuses mutually opposite such that the antenna coils are arranged opposite each other at a distance less than 10 millimeters.

**Fig. 2**

**Fig. 1**

**Fig. 3**

**Fig. 4**

EP 2 630 615 B1

**Fig. 5**

**Fig. 6**

EP 2 630 615 B1

EP 2 630 615 B1

A1, A2, AW4, AW5

C1   C2

10

AC3

S2

S3

W4

W5

2, 11

S2

S3

12

**Fig. 7**

A1, A2, AW6

C1   C2

10

AC4

W7a

W6

2, 11

12

12'

W6

W7b

**Fig. 8**

Fig. 10

Fig. 9

**Fig. 12**

**Fig. 11**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2358991 A
- US 20040256468 A

- WO 2010066799 A